# EUROPÄISCHE PATENTSCHRIFT

(11) **EP 1 991 454 B1**
(45) Veröffentlichungstag und Bekanntmachung des Hinweises auf die Patenterteilung: **09.10.2013**
(21) Anmeldenummer: 07704220.8
(22) Anmeldetag: 30.01.2007
(51) Int. Cl.: B60W 20/00, B60W 10/02, B60W 10/06, B60W 10/08, B60K 6/48, B60L 11/14, F02N 99/00, F02N 19/00

(54) **HYBRIDANTRIEB MIT EINEM DIREKTSTART UNTERSTÜTZENDER TRENNKUPPLUNG**
HYBRID DRIVE HAVING A SEPARATING CLUTCH WHICH ASSISTS A DIRECT START
GROUPE PROPULSEUR HYBRIDE MUNI D'UN ACCOUPLEMENT DE SEPARATION D'ASSISTANCE AVEC UN DEMARRAGE DIRECT

(30) Priorität: 24.02.2006 DE 102006008640
(43) Veröffentlichungstag der Anmeldung: 19.11.2008
(73) Patentinhaber: Robert Bosch GmbH, 70442 Stuttgart (DE)
(72) Erfinder: WEISS, Ruediger, 71159 Moetzingen (DE); KUSTOSCH, Mario, 71665 Vaihingen/Enz (DE)
(86) Internationale Anmeldenummer: PCT/EP2007/050867
(87) Internationale Veröffentlichungsnummer: WO 2007/099003

(56) Entgegenhaltungen:
- EP-A- 1 582 737
- EP-A- 1 586 767
- WO-A-01/56824
- DE-A1- 10 006 861
- DE-A1- 10 025 853
- DE-A1- 10 303 822
- DE-A1- 10 316 422
- DE-A1-102004 005 268
- DE-A1-102004 007 001
- DE-A1-102004 023 673

## Beschreibung

### Stand der Technik

Aus DE 103 56 384 C1 ist ein Impulsstartverfahren und eine Impulsstartvorrichtung für eine Brennkraftmaschine bekannt. Gemäß des in DE 103 56 384 C1 offenbarten Impulsstartverfahrens wird während einer Aufziehphase eine Schwungmasse drehangetrieben beschleunigt und anschließend während einer Kupplungsphase die drehende Schwungmasse mit einer drehbar gelagerten Welle, vorzugsweise der Kurbelwelle der Verbrennungskraftmaschine zur Drehmomentübertragung gekuppelt. Während der Aufziehphase und/oder der Kupplungsphase wird der Drehzahlverlauf der Schwungmasse ausgewertet und aus dieser Auswertung abgeleitet, ob ein erfolgreicher Start der Brennkraftmaschine möglich ist. Falls ein erfolgreicher Start der Brennkraftmaschine nicht zu erwarten steht, wird die Brennkraftmaschine über die Welle in eine für einen nachfolgenden zweiten Startversuch günstige Betriebsstellung gebracht. Gemäß des aus DE 103 56 384 C1 bekannten Impulsstartverfahrens wird während der Aufziehphase für die Auswertung der Gradient des Drehzahlverlaufs der Schwungmasse verwendet und bei zu geringem Gradienten die Kupplungsphase eingeleitet. Hybridantriebe für Kraftfahrzeuge umfassen in der Regel eine Verbrennungskraftmaschine und mindestens einen weiteren Antrieb so z.B. mindestens einen Elektroantrieb. Mit Hybridantrieb ausgerüsteten Fahrzeugen lässt sich ein rein elektrischer Fahrbetrieb realisieren. Wenn die elektrische Energie oder die Leistung der im Traktionsnetz des Hybridantriebs enthaltenen Batterie an ihre Grenzen stößt, wird die Verbrennungskraftmaschine zugeschaltet. Dazu muss diese gestartet werden und eine die Verbrennungskraftmaschine von mindestens einen Elektroantrieb trennende Trennkupplung ist zu schließen. Bei aus dem Stand der Technik bekannten Lösungen wird die Verbrennungskraftmaschine durch Schließen der Kupplung angerissen. Häufig wird für diesen Zweck eine spezielle Kupplung eingesetzt, welche für einen entsprechend hohen Energieeintrag ausgelegt ist. Die zum Start der Verbrennungskraftmaschine des Hybridantriebs erforderliche Energie ergibt sich aus der Höhe des Verbrennungsmotorschleppmoments und der Drehzahldifferenz zwischen der stillstehenden Verbrennungskraftmaschine und dem in Rotation befindlichen mindestens einen Elektroantrieb sowie der Dauer des Startvorgangs zum Start der Verbrennungskraftmaschine. Das Anreißen der Verbrennungskraftmaschine mittels der oben erwähnten Kupplung führt im allgemeinen zu einer negativen Beeinflussung der Zugkraft, d.h. des Vortriebs des Fahrzeugs, da die Leistung, die zum Starten des Verbrennungsmotors erforderlich ist, auf Kosten des Vortriebs geht. Ferner kann der Drehmomentverlauf im Antriebsstrang eines Fahrzeugs mit Hybridantrieb während dieses Vorgangs, d.h. des Direktstarts der Verbrennungskraftmaschine, aus dem rein elektrischen Fahrbetrieb durch Schwingungen oder überschüssiges Moment gestört werden. Diese Störungen können zum Teil gar nicht oder nur mit sehr großem Aufwand kompensiert werden, insbesondere sind in diesem Zusammenhang Getriebetypen mit permanentem Kraftschluss zu den Antriebsrädern wie z.B. klassische Automatikgetriebe mit Drehmomentenwandler von Komforteinbußen betroffen.

Eine Abhilfemöglichkeit bietet das Starten der Verbrennungskraftmaschine eines Hybridantriebs mit einem separaten Starter. Die Nachteile, die mit dieser Lösungsmöglichkeit einhergehen, liegen in den höheren Kosten für den Starter sowie das typische Geräusch während des Fremdstarts, welches aus dem Einspuren des Starters und der Motorkompression vor dem ersten Verbrennungstakt herrührt.

Die DE-A-10303822 offenbart ein Verfahren gemäß dem Oberbegriff des Anspruchs 1. Bei diesem Verfahren ist ein starterloser Direktstart des Verbrennungsmotors bei einer geöffneten Kupplung möglich. Ein Direktstart des Verbrennungsmotors ist jedoch nur einwandfrei möglich, wenn mindestens der Kolben eines Zylinders des Verbrennungsmotors eine Stellung zwischen 100° und 120° nach dem oberen Totpunkt einnimmt.

Bei hybridgetriebenen Fahrzeugen ist der Anspruch an einen geräuschneutralen Übergang aus dem rein elektrischen Fahrbetrieb in den Hybridenbetrieb besonders hoch, da der rein elektrische Fahrbetrieb im Wesentlichen geräuschlos verläuft und Maßstäbe durch existierende Serienfahrzeuge mit Hybridantrieb sehr hoch gesetzt sind.

Dieser Wunsch wird mit dem Verfahren gemäß Anspruch 1 erreicht, wobei die Trennkupplung benutzt wird, um die gewünschte Kolben/Zylinderstellung zu erreichen und somit einen starterlosen Direktstart zu ermöglichen.

Erfindungsgemäß wird ein Hybridantrieb, insbesondere ein Parallelhybridantrieb, für ein Fahrzeug vorgeschlagen, in dessen Antriebsstrang eine Verbrennungskraftmaschine, insbesondere eine solche mit Kraftstoffdirekteinspritzung, integriert ist sowie eine Trennkupplung zwischen der Verbrennungskraftmaschine und mindestens einem elektrischen Antrieb. Ferner umfasst der erfindungsgemäß vorgeschlagene Antriebsstrang für einen Parallelhybridantrieb ein Fahrzeuggetriebe sowie einen elektrischen Traktionsspeicher wie z.B. eine Hochspannungsbatterie.

Der vorgeschlagene Antriebsstrang kann für den rein elektrischen Betrieb des Kraftfahrzeugs eingesetzt werden, bei welchem die Trennkupplung zwischen dem mindestens einen elektrischen Antrieb und der Verbrennungskraftmaschine des Parallelhybridantriebs geöffnet steht. Reicht die Leistung des elektrischen Traktionszweiges, die den elektrischen Traktionsspeicher sowie den mindestens einen elektrischen Antrieb umfassend, für den Vortrieb nicht mehr aus, wird die Verbrennungskraftmaschine mit einem Dircktstart in Drehung versetzt. Der Direktstart ist eine Besonderheit einer Verbrennungskraftmaschine mit Kraftstoffdirekteinspritzung wie z.B. eines Ottomotors mit Benzindirekteinspritzung. Der Direktstart erfolgt rein durch Funktion des Verbrennungsmotors ohne Hilfe anderer Aggregate.

Die Verwendung einer Kraftstoff direkteinspritzenden Verbrennungskraftmaschine wie z.B. eines Ottomotors mit Benzindirekteinspritzung innerhalb eines Parallelhybridantriebsstranges bietet einerseits den Vorteil, dass beim Start der Verbrennungskraftmaschine mit z.B. Benzindirekteinspritzung eine geringe Geräuschemission im Vergleich zum Start dieser Verbrennungskraftmaschine durch einen konventionellen Anlasser entsteht. Ferner kann beim Einsatz von direkteinspritzenden Verbrennungskraftmaschinen wie z.B. Benzin direkteinspritzenden Ottomotoren in Parallelhybridantriebssträngen ein Starter entfallen, wodurch ein Gewinn von Bauraum erzielt wird. Ferner ergibt sich durch die erfindungsgemäß vorgeschlagene Lösung ein Zugkraft-neutrales Starten der Verbrennungskraftmaschine bei gegebenem Kraftschluss zu den angetriebenen Rädern, sowie eine sehr kurze Startzeit.

Bei Kraftstoff direkteinspritzenden Verbrennungskraftmaschinen wie z.B. bei Ottomotoren mit Benzindirekteinspritzung wird Kraftstoff in den Brennraum desjenigen Zylinders eingespritzt und gezündet, der sich in Arbeitstakt-Stellung befindet. Voraussetzung für einen erfolgreichen Start der Kraftstoff direkteinspritzenden Verbrennungskraftmaschine ist eine Kurbelwellenstellung zwischen 100° und 120° nach dem oberen Totpunkt. Darüber hinaus darf sich keine oder nur eine geringe Menge von Restgas im betreffenden Zylinder befinden. Wird die Verbrennungskraftmaschine abgestellt, so pendelt diese innerhalb eines "Auspendelbereichs" bis die Kurbelwelle an einer Position innerhalb dieses Bereichs stehen bleibt. Da es nicht sicher ist, dass die Verbrennungskraftmaschine genau im Ziel-Abstellbereich, d.h. in einer einen erfolgreichen Start ermöglichenden Kurbelwellenstellung zwischen 100° und 120° nach dem oberen Totpunkt, bedient man sich des dynamischen Direktstarts. Bei dem dynamischen Direktstart wird die Verbrennungskraftmaschine durch eine äußere Kraft, im vorliegenden Fall dem Einsatz eines Parallelhybridantriebs durch eine schlupfmomentgeregelte Trennkupplung bewegt.

In einem Hybridantriebsstrang, insbesondere einem Parallelhybridantriebsstrang, bietet eine Verbrennungskraftmaschine mit Kraftstoffdirekteinspritzung so z.B. ein Ottomotor mit Benzindirekteinspritzung, bei welchem der Dircktstart und insbesondere der dynamische Direktstart durchführbar sind, neue Möglichkeiten. Der Direktstart oder der dynamische Dircktstart kann dazu eingesetzt werden, um die Kraftstoff direkteinspritzende Verbrennungskraftmaschine aus dem elektrischen Fahrbetrieb des Fahrzeugs heraus zu starten.

Im Gegensatz zu konventionellen Antriebssträngen von Fahrzeugen kann die Trennkupplung dazu eingesetzt werden, die Kraftstoff direkteinspritzende Verbrennungskraftmaschine zu bewegen. Dies ist im Vergleich zu einer Lösung, bei der ein Anlasser bzw. Starter eingesetzt werden müsste, optimal bezüglich des auftretenden Geräuschs bzw. des sich über die Lebenszeit einstellenden Verschleißes der Komponenten.

Bei der eingesetzten Kupplung handelt es sich bevorzugt um eine schlupfmomentgeregelte Kupplung. In einer Systemstruktur zur Steuerung des Zusammenwirkens der Komponenten des Parallelhybridantriebs, d.h. der Kraftstoff direkteinspritzenden Verbrennungskraftmaschine, die mindestens einen elektrischen Antrieb und der bevorzugt schlupfgeregelten Trennkupplung ist eine Steuerung des Gesamtsystems (Hybrid Control) eine Steuerung der Verbrennungskraftmaschine (Engine Control) sowie eine Steuerung des mindestens einen elektrischen Antriebs (I-Drive-Control) sowie eine Steuerung der Trennkupplung (Clutch Control) implementiert, wobei diese Systemstruktur auf ein oder mehrere Steuergeräte verteilt sein kann. Der Fahrer des Fahrzeugs mit dem erfindungsgemäß vorgeschlagenen Parallelhybridantrieb stellt seine Anforderung an den an die angetriebenen Räder abzugebenden Antriebsmoments über die Stellung des Fahrpedals ein. Diese Vorgabe wird von der Komponente Fahrpedal als Wunschmoment interpretiert. Die Steuerung des Gesamtsystems (Hybrid Control) setzt diese Vorgabe des Drehmomentwunsches des Fahrers zunächst rein elektrisch, d.h. mit dem mindestens einen elektrischen Antrieb um, die Verbrennungskraftmaschine wird zunächst nicht betrieben.

### Zeichnung

Anhand der Zeichnung wird die Erfindung nachstehend eingehender beschrieben.

Es zeigt:
- Figur 1: den Aufbau des Antriebsstranges eines Parallelhybridantriebs,
- Figur 2: den Auspendelwinkel sowie den Zielabstellbereich einer Verbrcnnungskraftmaschine insbesondere eines Benzin direkteinspritzenden Ottomotors,
- Figur 3: die Systemstruktur zur Steuerung des Zusammenspiels der in Figur 1 dargestellten Komponenten des Parallelhybridantriebs, d.h. der Verbrennungskraftmaschine des mindestens einen elektrischen Antriebs und der Trennkupplung,
- Figur 4: einen Algorithmus zum Starten der Kraftstoff direkteinspritzenden Verbrennungskraftmaschine mit Direktstart aus dem rein elektrischen Fahrbetrieb,
- Figur 5: eine Konditionierung der Verbrennungskraftmaschine während des rein elcktrischen Fahrbetriebs und späterem Direktstart bei stillstehender Verbrennungskraftmaschine und
- Figur 6: eine Startanforderung, welche die in Figur 5 dargestellte Konditionierung der Kraftstoff direkteinspritzenden Verbrennungskraftmaschine unterbricht und einen dynamischen Direktstart der Kraftstoff direkteinspritzenden Verbrennungskraftmaschine zur Folge hat.

### Ausführungsvarianten

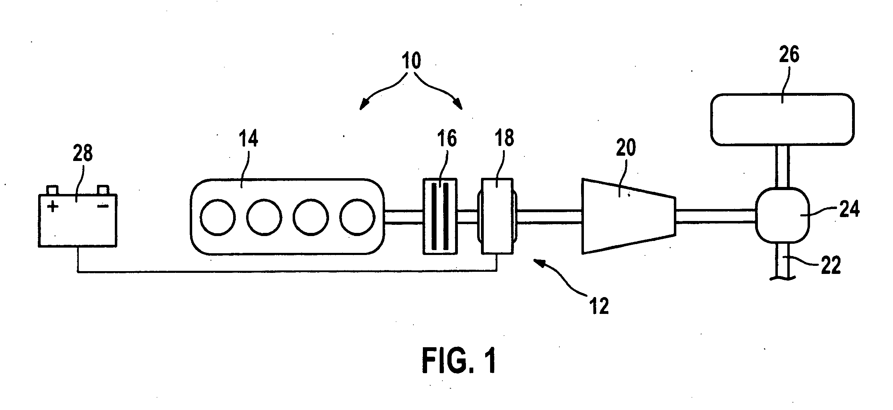

Der Darstellung gemäß Figur 1 ist ein als Parallelhybrid ausgelegter Hybridantrieb zu entnehmen.

Ein in Figur 1 dargestellter Hybridantrieb 10 ist als Parallelhybrid ausgelegt und umfasst einen Antriebsstrang 12, in dem eine Verbrennungskraftmaschine 14 aufgenommen ist. Bei der Verbrennungskraftmaschine 14 handelt es sich bevorzugt um eine Kraftstoff direkteinspritzende Verbrennungskraftmaschine wie z.B. einen Ottomotor mit Benzindirekteinspritzung. Ferner umfasst der in Figur 1 dargestellte Hybridantrieb 10 eine Trennkupplung 16 sowie mindestens einen Elektroantrieb 18. Die Trennkupplung 16 befindet sich zwischen der Verbrennungskraftmaschine 14, die bevorzugt als Kraftstoff direkteinspritzende Verbrennungskraftmaschine ausgeführt ist und dem mindestens einen Elektroantrieb 18. Der Antriebsstrang 12 des in Figur 1 dargestellten Hybridantriebs 10 umfasst darüber hinaus ein Fahrzeuggetriebe 20, welches auf ein Achsgetriebe 24 einer Antriebsachse 22 wirkt. Mit Bezugszeichen 26 ist ein angetriebenes Rad bezeichnet, welches auf der Antriebsachse 22 aufgenommen ist. Ferner weist der in Figur 1 dargestellte Hybridantrieb 10 eine Traktionsbatterie 28 auf, die in der Regel als eine Hochspannungsbatterie ausgeführt ist und den mindestens einen Elektroantrieb 18 speist.

Das besondere Merkmal des Antriebsstranges 12 ist, dass dieser für einen rein elektrischen Betrieb genutzt werden kann, bei dem die Trennkupplung 16 geöffnet bleibt. Reicht die Leistung des elektrischen Traktionszweiges, die Traktionsbatterie 28 und den mindestens einen Elektroantrieb umfassend, für den Vortrieb des Fahrzeugs nicht mehr aus, wird die Verbrennungskraftmaschine 14, bei der es sich beispielsweise um einen Ottomotor mit Direkteinspritzung handeln kann, mit einem Direktstart in Drehung versetzt. Der Einsatz einer Kraftstoff direkteinspritzenden Verbrennungskraftmaschine 14 wie z.B. eines Ottomotors mit Benzindirekteinspritzung bietet den Vorteil, dass im Vergleich zum Start der Verbrennungskraftmaschine 14 mittels eines konventionellen Anlassers eine geringere Geräuschemission auftritt, der ansonsten erforderliche Starter komplett entfallen kann, was zusätzlichen Bauraum im Motorraum schafft und das ein zugkraftneutrales Starten der Verbrennungskraftmaschine 14 bei gegebenem Kraftschluss zu den angetriebenen Rädern erfolgen kann. Ferner zeichnet sich der in Figur 1 dargestellte Antriebsstrang 12 mit dem Hybridantrieb 10 dadurch aus, dass eine kurze Startzeit erreicht werden kann.

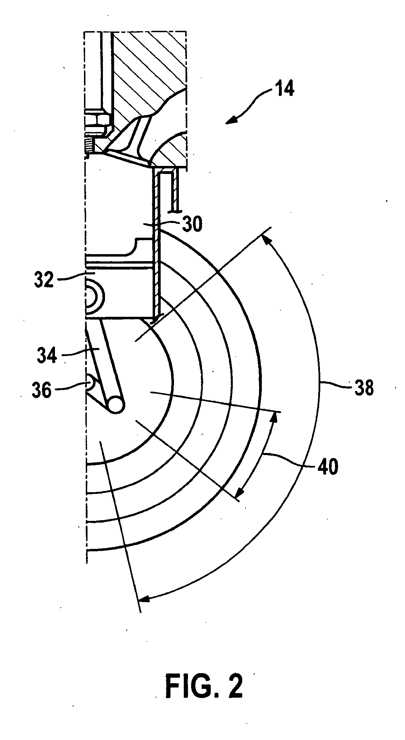

Der Darstellung gemäß Figur 2 ist beispielhaft ein Zylinder der in Figur 1 dargestellten Verbrennungskraftmaschine mit Kraftstoffdirekteinspritzung zu entnehmen.

Aus der Darstellung gemäß Figur 2, die im Halbschnitt wiedergegeben ist, geht hervor, dass die Verbrennungskraftmaschine 14 eine direkteinspritzende Verbrennungskraftmaschine ist wie z.B. ein Ottomotor mit Benzindirekteinspritzung. Die bevorzugt als Ottomotor mit Benzindirekteinspritzung ausgeführte Verbrennungskraftmaschine 14 kann mittels des Direktstarts angelassen werden. Dabei wird Kraftstoff in den Brennraum eines Zylinders 30 eingespritzt, dessen Kolben 32 sich in Arbeitstakt-Stellung befindet. Voraussetzung für einen erfolgreichen Start ist eine Stellung der Kurbelwelle 36 zwischen 100° und 120° nach dem oberen Totpunkt. Begünstigt wird der Direktstart einer solcherart gestalteten Verbrennungskraftmaschine 14 dadurch, dass sich entweder nur eine geringe Menge oder gar kein Restgas innerhalb des Zylinders 30 befindet. Nach dem vorhergehenden Betriebszyklus der Verbrennungskraftmaschine 14 wird diese abgestellt, wobei mindestens ein Zylinder der Verbrennungskraftmaschine eine innerhalb des in Figur 2 dargestellten Auspendelwinkelbereichs 38 steht. Der Zielabstellbereich, welchen der Kolben 32 des Zylinders 30 der Kraftstoff direkteinspritzenden Verbrennungskraftmaschine 14 bevorzugt erreichen sollte, ist in Figur 2 durch Bezugszeichen 40 hervorgehoben. Da jedoch nicht sicher ist, dass die Verbrennungskraftmaschine 14 genau innerhalb des Zielabstellbereichs 40 stehen bleibt, kann ein dynamischer Direktstart vorgenommen werden. Innerhalb des dynamischen Direktstarts wird die Kurbelwelle 36 der bevorzugt als Kraftstoff direkteinspritzenden Verbrennungskraftmaschine ausgeführten Verbrennungskraftmaschine 14 durch eine äußere Kraft, die durch die schlupfmomentgeregelte Trennkupplung 16 aufgebracht wird, bewegt. Die der Verbrennungskraftmaschine 14 zugeordnete Motorsteuerung eine für einen Direktstart günstige Position erkennt, kann eingespritzt und gezündet werden.

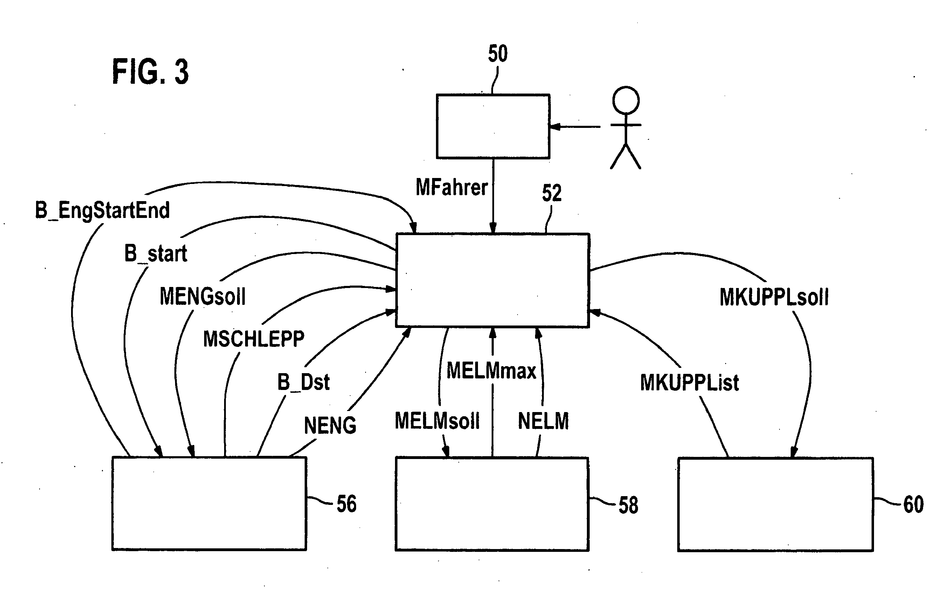

Figur 3 ist eine Systemstruktur zur Steuerung des Zusammenspiels der Komponenten Verbrennungskraftmaschine, Elektroantrieb und Trennkupplung des in Figur 1 dargestellten Parallelhybridantriebs zu entnehmen.

Aus der Darstellung gemäß Figur 3 lässt sich entnehmen, dass die dort dargestellte Systemstruktur ein vom Fahrer des Fahrzeugs betätigbares Fahrpedal 50 aufweist. Über das Fahrpedal 50 wird der Drehmomentenwunsch des Fahrers umgesetzt. Vom Fahrpedal 50 wird ein Drehmomentwunsch des Fahrers M_{Fahrer} an eine Steuerung 52 des Gesamtsystems (Hybrid Control) übertragen. Der Steuerraum 52 des Gesamtsystem Hybridantrieb sind eine Steuerung 56 für die Verbrennungskraftmaschine 14, eine Steuerung 58 für den mindestens einen Elektroantrieb 18 sowie eine Steuerung 60 zur Regelung der Trennkupplung 16 des Hybridantriebs 10 gemäß der Darstellung in Figur 1 untergeordnet.

Die einzelnen Schnittstellen zwischen den Steuerungen 52, 56, 58 und 60 stellen sich wie folgt dar:
Von der Steuerung 56 der Verbrennungskraftmaschine 14 werden eine Drehzahlinformation N_ENG der Verbrennungskraftmaschine 14, ein Zustandssignal so z.B. ein Flag B_DST zur Anzeige der Direktstartbereitschaft der Verbrennungskraftmaschine 14, eine Information über das Schleppmoment der Verbrennungskraftmaschine 14 so z.B. ein Flag M_SCHLEPP, sowie gegebenenfalls eine Information so z.B. ein Flag B_ENG START ENT zur Anzeige des Endes eines Startvorgangs der Verbrennungskraftmaschine 14 an die Steuerung 52 des Gesamtsystems übertragen. Diese wiederum übermittelt gegebenenfalls eine Information so z.B. ein Flag B_START zum Start der Verbrennungskraftmaschine an die Steuerung 56 der Verbrennungskraftmaschine 14. Ferner wird abhängig vom Drehmomentwunsch M_{Fahrer} des Fahrers eine Information M_ENG_{SOLL} hinsichtlich des durch die Verbrennungskraftmaschine 14 zu erzeugenden Sollmoments an die Steuerung 56 der Verbrennungskraftmaschine 14 übertragen. Schließlich gibt die Steuerung 56 der Verbrennungskraftmaschine 14 eine Drehzahlinformation N_ENG hinsichtlich der aktuellen Drehzahl der Verbrennungskraftmaschine 14 an die Steuerung 52 des Gesamtsystems zurück.

Die Steuerung 52 des Gesamtsystems gibt eine Information hinsichtlich des durch den mindestens einen Elektroantrieb 18 zu erzeugenden Sollmoments M_ELM_{SOLL} an die Steuerung 58 des mindestens einen Elektroantriebs 18 aus und wird von der Steuerung 58 mit Informationen hinsichtlich des maximal umsetzbaren Drehmoments des mindestens einen Elektroantriebs 18 M_ELM_{MAX} sowie der aktuellen Drehzahl N_ELM des mindestens einen elektrischen Antriebs 18 versorgt.

Die Steuerung 60 der Trennkupplung 16 des Hybridantriebs 10 liefert eine Information M_KUPPL_{IST} hinsichtlich des Ist-Schlupfmoments der Trennkupplung 16 an die Steuerung 52 des Gesamtsystems und empfängt von dieser eine Information hinsichtlich des vorgegebenen Sollschlupfmoments M_KUPPL_{SOLL}, mit dem die Trennkupplung 16 entsprechend des Fahrerwunsches zu betreiben ist.

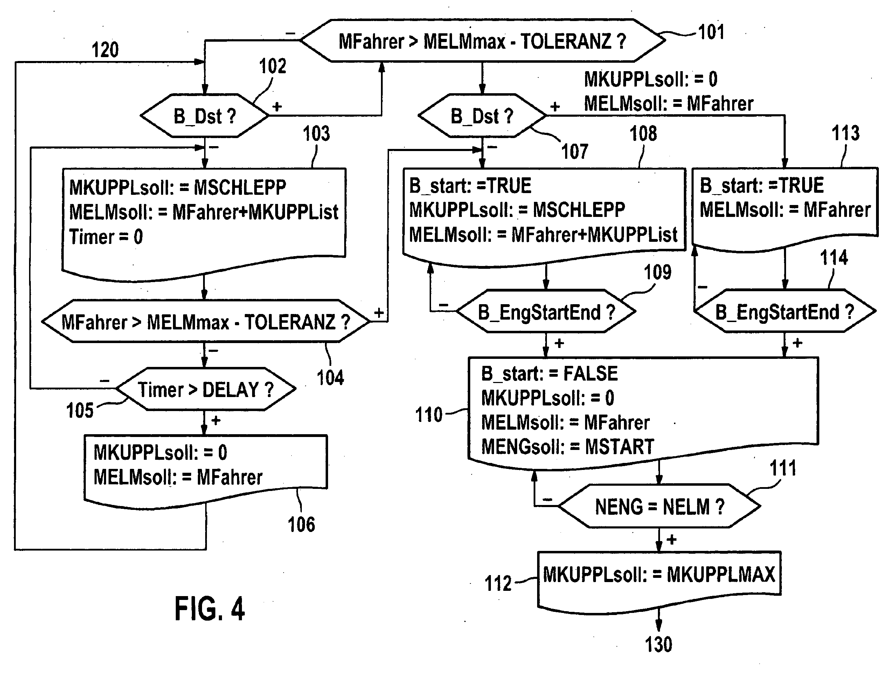

Der Darstellung gemäß Figur 4 ist der Informationsfluss in der in Figur 3 dargestellten Systemstruktur zwischen den einzelnen Komponenten dieser Systemstruktur beispielhaft zu entnehmen.

In einem ersten Schritt 101 wird zunächst abgeprüft, ob der Drehmomentenwunsch M_{Fahrer} des Fahrers alleine durch den mindestens einen elektrischen Antrieb 18 abgedeckt werden kann. Innerhalb des ersten Schrittes 101 wird der Drehmomentwunsch M_{Fahrer} des Fahrers abgeprüft, ob dieser größer ist als das Sollmoment M_ELM_{SOLL} des mindestens einen elektrischen Antriebs 18 abzüglich einer TOLERANZ. Der Wert TOLERANZ stellt eine dynamische Reserve dar, die beim Starten der Verbrennungskraftmaschine 14 verwendet wird, um den Drehzahlabfall des mindestens einen Elektroantriebs 18, der mit dem Starten der Verbrennungskraftmaschine 14 zwangsläufig verbunden ist, zu kompensieren. Innerhalb eines zweiten Schrittes 102 wird abgeprüft, ob an der Verbrennungskraftmaschine 14 direkt Startbereitschaft vorliegt oder nicht, d.h. es wird der Zustand eines Flags B_DST abgefragt, ob dieses gesetzt oder nicht gesetzt ist. Ist das Flag B_DST gesetzt, so bedeutet dies, dass die Verbrennungskraftmaschine 14 für den Direktstart-Modus positioniert ist und ein Direktstart möglich ist. Der Befehl zum Starten der Verbrennungskraftmaschine 14 erfolgt jedoch erst in Schritt 108 bzw. 113.

Ist das Flag B_DST nicht gesetzt, wird zum dritten Schritt 103 übergegangen und die Trennkupplung 16 auf das Schleppmoment M_SCHLEPP der Verbrennungskraftmaschine 14 geregelt. Dadurch wird die Verbrennungskraftmaschine 14 angedreht. Der mindestens eine elektrische Antrieb 18 kompensiert hierbei das tatsächlich eingestellte Schlupfmoment M_KUPPL_{IST}, d.h. das Ist-Schleppmoment der Trennkupplung. Ein zuvor auf 0 gesetzter Timer wird gestartet. Der dritte Schritt 103 wird solange durchgeführt, bis eine Zeitspanne DELAY abgelaufen ist. Im dritten Schritt 103 wird das Sollmoment M_KUPPL_{SOLL} auf das Schleppmoment M_SCHLEPP der Verbrennungskraftmaschine 14 gesetzt, das Sollmoment M_ELM_{SOLL} und des mindestens einen elektrischen Antriebs 18 wird auf das Summenmoment des aus Drehmomentwunsch M_{Fahrer} zuzüglich M_KUPPL_{IST} der Trennkupplung 16 gesetzt.

In einem vierten Verfahrensschritt 104 wird wiederum abgeprüft, ob der Drehmomentwunsch M_{Fahrer} ein Zuschalten der Verbrennungskraftmaschine 14 erforderlich macht oder nicht. Ist dies der Fall, so muss der dritte Verfahrensschritt 102 abgebrochen werden und die Verbrennungskraftmaschine 14 muss durch einen dynamischen Start gestartet werden, was innerhalb des achten Schritts 108 erfolgt, zu dem in diesem Falle verzweigt wird.

In einem sich bei negativem Ergebnis des vierten Schritts 104 anschließenden fünften Schritt 105 wird abgeprüft, ob die durch DELAY vorgegebene Zeitspanne abgelaufen ist oder nicht. Wird dies bejaht, so wird zu einem sechsten Schritt 106 verzweigt, der die Trennkupplung 16 öffnet, so dass der Drehmomentwunsch M_{Fahrer} des Fahrers allein durch den mindestens einen Elektroantrieb 18 umgesetzt wird. Dies charakterisiert den mit Bezugszeichen 120 angedeuteten rein elektrischen Fahrbetrieb.

Bei negativem Resultat des fünften Schritts 105, d.h. wenn die Zeitspanne DELAY noch nicht abgelaufen ist, wird wieder vor den dritten Schritt 103 verzweigt und dieser erneut durchlaufen.

Ist in den rein elektrischen Fahrbetrieb 120 geschaltet, was gemäß des sechsten Schritts erfolgt, so wird die Verbrennungskraftmaschine 14 auspendeln und nimmt dabei bevorzugt die in Figur 2 dargestellte Startposition, d.h. den Ziel-Abstellbereich 40 ein. Ferner wird die Direktstart-Bereitschaft durch Abfrage des Flags B_DST erneut geprüft.

Nach dem ersten Schritt 101, ob der Drehmomentwunsch M_{Fahrer} alleine durch den elektrischen Antrieb 18 abgedeckt werden kann oder nicht, wird parallel zum zweiten Schritt 102 ein siebter Schritt durchlaufen. In diesem wird der Zustand des Flags B_DST abgefragt.

Wenn der Drehmomentwunsch M_{Fahrer} durch den mindestens einen Elektroantrieb 18 nicht abgedeckt werden kann und keine Direktstartbereitschaft vorliegt, d.h. das Flag B_DST nicht gesetzt ist, wird ein achter Schritt durchlaufen und ein dynamischer Direktstart ausgelöst. In diesem Falle wird das Flag B_START auf den Wert TRUE gesetzt, das Sollmoment M_KUPPL_{SOLL} auf das Motorschleppmoment M_SCHLEPP gesetzt und das Sollmoment M_ELM_{SOLL} des mindestens einen Eleklroantriebs 18 auf den Wert gesetzt, der sich aus der Summe des Drehmomentwunsches M_{Fahrer} zuzüglich des Ist-Moments M_KUPPL_{IST} der Trennkupplung 16 ergibt. Die Verbrennungskraftmaschine 14 erhält über die Steuerung 56 den Startbefehl, während die Verbrennungskraftmaschine gleichzeitig durch Anlegen der Trennkupplung 16 durchgedreht wird. Die Trennkupplung 16 wird in diesem Falle auf das Schleppmoment M_SCHLEPP geregelt, welches wie oben bereits ausgeführt, vom mindestens einen Elektroantrieb 18 zu kompensieren ist.

In einem neunten Schritt 109, der sich an den achten Schritt 108 anschließt, wird ein Flag B_ENG START ENT dahingehend überprüft, ob dieses gesetzt oder ungesctzt ist, d.h. ob die Verbrennungskraftmaschine 14 gestartet ist oder nicht.

Ist die Verbrennungskraftmaschine 14 gestartet, so wird innerhalb eines zehnten Schritts 110 der Startbefehl an die Verbrennungskraftmaschine 14 wieder zurückgenommen, d.h. das Flag B_START wieder auf den Wert FALSE gesetzt. Das Soll-Schlupfmoment M_KUPPL_{SOLL} wird auf den Wert 0 gesetzt, das Sollmoment M_ELM_{SOLL} des mindestens einen Elektroantriebs 18 wird auf den Drehmomentwunsch M_{Fahrer} gesetzt und das Sollmoment M_ENG_{SOLL} der Verbrennungskraftmaschine 14 auf den Wert M_{START}. Der Wert M_ENG_{SOLL} stammt aus einer Kennlinie, die der Verbrennungskraftmaschine 14 ein drehzahlabhängiges Sollmoment vorgibt.

Danach wird im zehnten Schritt 110 die Trennkupplung 16 geöffnet, um die Verbrennungskraftmaschine 14 während deren Synchronisation mit der aktuellen Drehzahl N_{ELM} des mindestens einen elektrischen Antriebs 18 nicht zu behindern.

In einem sich am zehnten Schritt 110 anschließenden elften Schritt 111 wird abgefragt, ob die Drehzahl N_ENG der Verbrennungskraftmaschine 14 gleich der aktuellen Drehzahl N_ELM des mindestens einen elektrischen Antriebs 18 ist. Falls dies verneint wird, wird erneut zum zehnten Schritt 110 rückverzweigt. Im Falle der Bejahung wird zum zwölften Schritt 112 verzweigt und das Sollmoment M_KUPPL_{SOLL} der Trennkupplung 16 auf den maximal übertragbaren Momentenwert M_KUPPL_{MAX} gesetzt. Nach Durchlaufen des zwölften Schritts 112 liegt Hybridbetrieb 130 vor, d.h. das Fahrzeug wird gleichzeitig durch die Verbrennungskraftmaschine 14 und den mindestens einen elektrischen Antrieb 18 angetrieben.

Für den Fall, dass gemäß des zweiten bzw. siebten Schritts 102, 107 das Flag B_DST den Wert TRUE annimmt, liegt Direkt-Startbereitschaft der Verbrennungskraftmaschine 14 vor und es wird nicht zum achten Schritt 108, sondern zu einem dreizehnten Schritt 113 verzweigt, so dass der durch den mindestens einen elektrische Antrieb 18 allein nicht zu stellende Drehmomentwunsch M_{Fahrer} des Fahrers durch das Zuschalten der Verbrennungskraftmaschine 14 erfüllt wird. Da das Flag B_DST gesetzt ist, liegt Direkt-Startbereitschaft der Verbrennungskraftmaschine 14 vor und diese kann gestartet werden, ohne diese mittels eines Schließvorgangs des Trennkupplung 16 zu bewegen. Diese vorteilhafte Eigenschaft eine Kraftstoff direkteinspritzenden Verbrennungskraftmaschine 14 wie z.B. ein Ottomotor mit Benzindirekteinspritzung wird in diesem Zusammenhang vorteilhaft genutzt.

Nach dem Durchlaufen des dreizehnten Schrittes 113 wird geprüft, ob die Verbrennungskraftmaschine 14 gestartet ist, d.h. der Zustand des Flags B_ENG START END wird auf die Werte TRUE oder FALSE abgefragt und anschließend zum zehnten Schritt 110, der vorstehend bereits erläutert wurde, verzweigt.

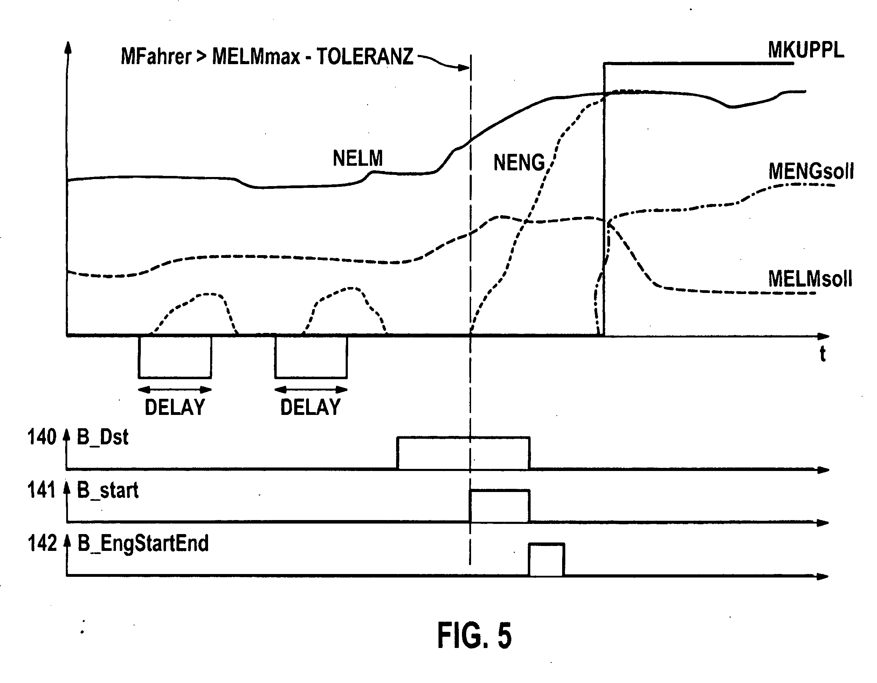

Der Darstellung gemäß Figur 5 ist eine Konditionierung der Verbrennungskraftmaschine während des elektrischen Fahrmodus und ein aus diesem erfolgender späterer Direktstart des stillstehenden Verbrennungskraftmaschine zu entnehmen.

Die Verbrennungskraftmaschine 14 wird gemäß der Darstellung in Figur 5 während des rein elektrischen Fahrbetriebs 120 konditioniert. Während der beiden in Figur 5 mit DELAY bezeichneten Zeitspannen unternimmt die Steuerung 52 des Gesamtsystems zwei Startversuche, bis die direkte Start-Bereitschaft durch die Verbrennungskraftmaschine angezeigt wird, d.h. das Flag B_DST den Wert TRUE annimmt. Dies geht aus dem Signalverlauf 140, der den Zustand des Flags B_DST in Figur 5 wiedergibt, hervor. Zu dem Zeitpunkt, an dem der Drehmomentwunsch M_{Fahrer} durch den mindestens einen elektrischen Antrieb nicht mehr abgedeckt werden kann, d.h. der Drehmomentwunsch M_{Fahrer} größer ist als das maximal zu stellende Moment des mindestens einen elektrischen Antriebs M_ELM_{MAX} abzüglich der TOLERANZ, wird die Verbrennungskraftmaschine 14 gestartet, d.h. das Flag B_START (vgl. Signalverlauf 141 in Figur 5) auf den Wert TRUE gesetzt. In Figur 5 ist der erfolgreiche Start durch einen starken Drehzahlanstieg der Drehzahl N_ENG der Verbrennungskraftmaschine 14 dargestellt. Wenn die Drehzahl der Verbrennungskraftmaschine M_ENG und die des elektrischen Antriebs miteinander synchronisiert sind, erfolgt ein Schließen der Trennkupplung 16. Für das Schließen wird der Trennkupplung 16 das maximale Sollmoment vorgegeben, so dass die Trennkupplung 16 vollständig schließt.

Gemäß des in Zusammenhang mit Figur 4 beschriebenen Signalflussplans werden die Verfahrensschritte in folgender Reihenfolge durchlaufen: 102, 103, 104, 106, 102, 103, 104, 106, 101, 113, 114, 110, 111 und 112.

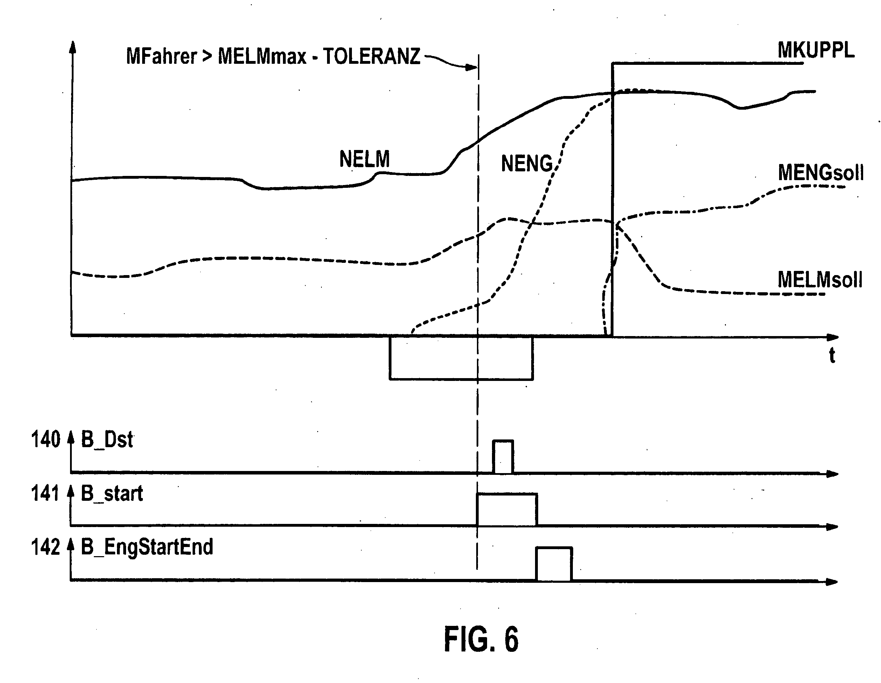

Aus der Darstellung gemäß Figur 6 geht der Fall hervor, dass eine Startanforderung an die Verbrennungskraftmaschine, deren in Figur 5 dargestellte Konditionierung unterbricht und ein dynamischer Direktstart erforderlich ist.

Im in Figur 6 dargestellten Fall wird die Konditionierung durch einen erhöhten Drehmomentwunsch M_{Fahrer} an den Antrieb unterbrochen, dargestellt durch die vertikal verlaufende gestrichelte Linie. In diesem Falle übersteigt der Drehmomentwunsch M_{Fahrer} das von dem mindestens einen Elektroantrieb 18 stellbare maximale Moment M_ELM_{MAX} abzüglich der TOLERANZ. In diesem Falle erfolgt das Durchlaufen des achten Verfahrensschritts 108 gemäß der Darstellung in Figur 4 zur Durchführung eines dynamischen Direktstarts. Gemäß des Verlaufs 141 des Zustands des Flags B_START wird diese auf den Wert TRUE gesetzt, das Flag B_DST zur Anzeige der Direkt-Startbereitschaft der Verbrennungskraftmaschine auf TRUE gesetzt und die Verbrennungskraftmaschine durch Schließen der Trennkupplung 16 durchgedreht. Bei diesem Vorgang ist die Trennkupplung 16 auf das Schleppmoment M_SCHLEPP der Verbrennungskraftmaschine 14 geregelt. Das durch die Trennkupplung 16 und die Verbrennungskraftmaschine 14 übertragene Schleppmoment M_SCHLEPP muss vom mindestens einen Elektroantrieb 18 kompensiert werden, dessen Drehzahl abfällt. Gemäß der Darstellung in Figur 6 werden folgende Schritte gemäß des Flussdiagramms in Figur 4 durchlaufen: 102, 103, 104, 102, 103, 104, 108, 109, 108, 109, 110, 111 und 112.

## Patentansprüche

1. Verfahren zum Betrieb eines Hybridantriebs (10) eines Fahrzeugs mit einer Verbrennungskraftmaschine (14) und mit mindestens einem Elektroantrieb (18), dem mindestens eines Traktionsbatterie (20) zugeordnet ist, wobei die Verbrennungskraftmaschine (14) aus dem Betriebsmodus "rein elektrisches Fahren" (120) des Hybridantriebs (10) mittels eines starterlosen Direktstarts gestartet werden kann, und die Verbrennungskraftmaschine (14) des Hybridantriebs (10) abhängig vom Drehmomentwunsch (M_{Father}) des Fahrers gestartet wird, **dadurch gekennzeichnet, dass**
- wenn der mindestens eine Elektroantrieb den Drehmomentwunsch nicht umsetzen kann und bei vorliegender Direkt-Startbereitschaft der Verbrennungskraftmaschine (14) (B_DST : = TRUE), diese bei geöffneter Trennkupplung (16) gestartet wird,
- wenn der mindestens eine Elektroantrieb den Drehmomentwunsch nicht umsetzen kann und bei nicht vorliegender Direktstartbereitschaft (B_DST:=FALSE) ein dynamischer Direktstart ausgeführt wird, und
- wenn der mindestens eine Elektroantrieb den Drehmomentwunsch umsetzen kann und bei nicht vorliegender Direkt-Startbereitschaft der Verbrennungskraftmaschine (14) (B_DST : = FALSE), die schlupfmomentgeregelte Trennkupplung (16) ein Motorschleppmoment (M_SCHLEPP) an die Verbrennungskraftmaschine (14) überträgt, und nach Ablauf einer Zeitspanne (DELAY), innerhalb der die Verbrennungskraftmaschine (14) nicht gestartet wird, die Trennkupplung (16) geöffnet wird und die Verbrennungskraftmaschine (14) innerhalb eines Auspendelwinkelbereichs (38), bevorzugt innerhalb eines Ziel-Abstellbereichs (40) auspendelt.

2. Verfahren gemäß Anspruch 1, **dadurch gekennzeichnet, dass** bei steigendem Drehmomentwunsch (M_{Fahrer}) des Fahrers und bei nicht vorliegender Direkt-Startbereitschaft der Verbrennungsmaschine die Verbrennungskraftmaschine (14) mittels eines dynamischen Direktstarts gestartet wird.

3. Verfahren gemäß Anspruch 1, **dadurch gekennzeichnet, dass** der Ziel-Abstellbereich (40) der Verbrennungskraftmaschine (14) durch eine Stellung mindestens eines Zylinders (30) zwischen 100° und 120° nach dem oberen Totpunkt definiert ist.

4. Verfahren gemäß Anspruch 1, **dadurch gekennzeichnet, dass** der Hybridantrieb (10) mittels einer Steuerung (52) überwacht wird, der eine Steuerung (56) für die Verbrennungskraftmaschine (14), eine Steuerung (58) für den mindestens einen Elektroantrieb (18) und eine Steuerung (60) für eine Trennkupplung (16) untergeordnet sind, und die Steuerung (52) den Drehmomentwunsch (M_{Fahrer}) des Fahrers zunächst mittels des mindestens einen Elektroantriebs (18) umsetzt.

## Claims

1. Method for operating a hybrid drive (10) of a vehicle having an internal combustion engine (14) and having at least an electric drive (18) to which at least one traction battery (20) is assigned, wherein the internal combustion engine (14) can be started from the "pure electric driving" (120) operating mode of the hybrid drive (10) by means of a starterless direct start, and the internal combustion engine (14) of the hybrid drive (10) is started as a function of the torque request (M_{driver}) of the driver, **characterized in that**
- if the at least one electric drive cannot implement the torque request and the internal combustion engine (14) is directly ready to start (B_DST: = TRUE), the internal combustion engine (14) is started when the clutch (16) is open,
- if the at least one electric drive cannot implement the torque request and the internal combustion engine (14) is not directly ready to start (B DST: = FALSE), a dynamic direct start is carried out, and
- if the at least one electric drive can implement the torque request and the internal combustion engine (14) is not directly ready to start (B_DST: = FALSE), the slip-torque-regulated clutch (16) transmits an engine drag torque (M_DRAG) to the internal combustion engine (14), and after the expiry of a time period (DELAY) within which the internal combustion engine (14) is not started, the clutch (16) is opened and the internal combustion engine (14) preferably oscillates to a standstill within an oscillation settling range (38) within a target shutting down range (40).

2. Method according to Claim 1, **characterized in that** in the case of an increasing torque request (M_{driver}) of the driver and when the internal combustion engine is not directly ready to start, the internal combustion engine (14) is started by means of a dynamic direct start.

3. Method according to Claim 1, **characterized in that** the target shutting down range (40) of the internal combustion engine (14) is defined by a position of at least one cylinder (30) between 100° and 120° after the top dead centre.

4. Method according to Claim 1, **characterized in that** the hybrid drive (10) is monitored by means of a controller (52) to which a controller (56) for the internal combustion engine (14), a controller (58) for the at least one electric drive (18) and a controller (60) for a clutch (16) are subordinated, and the controller (52) initially implements the torque request (F_{driver}) of the driver by means of the at least one electric drive (18).

## Revendications

1. Procédé de fonctionnement d'un entraînement hybride (10) d'un véhicule automobile comportant un moteur à combustion interne (14) et au moins un entraînement électrique (18), auquel au moins une batterie de traction (20) est coordonnée, dans lequel le moteur à combustion interne (14) peut être démarré à partir du mode de fonctionnement « conduite électrique pure » (120) de l'entraînement hybride (10) au moyen d'un démarrage direct sans démarreur, et le moteur à combustion interne (14) de l'entraînement hybride (10) est démarré en fonction du souhait de couple de rotation (M_{Fahrer}) du conducteur, **caractérisé en ce que**
- quand l'au moins un entraînement électrique ne peut pas convertir le souhait de couple de rotation et quand le moteur à combustion interne (14) se tient prêt à démarrer directement (B_DST : = TRUE), celui-ci est démarré en présence d'un embrayage de désolidarisation (16) ouvert,
- quand l'au moins un entraînement électrique ne peut pas convertir le souhait de couple de rotation et quand le moteur à combustion interne (14) ne se tient pas prêt à démarrer directement (B_DST : = FALSE), un démarrage direct dynamique est effectué, et
- quand l'au moins un entraînement électrique peut convertir le souhait de couple de rotation et quand le moteur à combustion interne (14) ne se tient pas prêt à démarrer directement (B_DST : = FALSE), l'embrayage de désolidarisation (16) régulé par couple de glissement transmet un couple de trainée de moteur (M_SCHLEPP) au moteur à combustion interne (14), et après l'écoulement d'une durée temporelle (DELAY), pendant laquelle le moteur à combustion interne (14) n'est pas démarré, l'embrayage de désolidarisation (16) est ouvert et le moteur à combustion interne (14) effectue un mouvement pendulaire à l'intérieur d'une plage d'angle de mouvement pendulaire (38), de préférence à l'intérieur d'une plage d'arrêt cible (40).

2. Procédé selon la revendication 1, **caractérisé en ce que** lorsque le souhait de couple de rotation (M_{Fahrer}) du conducteur augmente et le moteur à combustion interne ne se tient pas prêt à démarrer directement, le moteur à combustion interne (14) est démarré au moyen d'un démarrage direct dynamique.

3. Procédé selon la revendication 1, **caractérisé en ce que** la plage d'arrêt cible (40) du moteur à combustion interne (14) est définie par une position d'au moins un cylindre (30) entre 100° et 120° après le point mort haut.

4. Procédé selon la revendication 1, **caractérisé en ce que** l'entraînement hybride (10) est surveillé au moyen d'une unité de commande (52), à laquelle sont subordonnées une unité de commande (56) pour le moteur à combustion interne (14), une unité de commande (58) pour l'au moins un entraînement électrique (18) et une unité de commande (60) pour un embrayage de désolidarisation (16), et l'unité de commande (52) convertit tout d'abord le souhait de couple de rotation (M_{Fahrer}) du conducteur au moyen de l'au moins un entraînement électrique (18).
